(19) Europäisches Patentamt

European Patent Office

Office européen des brevets

(11) Numéro de publication : **0 044 760**
**B1**

(12) **FASCICULE DE BREVET EUROPÉEN**

(45) Date de publication du fascicule du brevet :
26.09.84

(21) Numéro de dépôt : **81400993.2**

(22) Date de dépôt : **19.06.81**

(51) Int. Cl.³ : **D 04 H   3/07**, B 65 H 81/00,
**B 29 D   3/02**

(54) **Procédé et machine pour la fabrication de pièces de révolution à partir de fils disposés selon trois directions.**

(30) Priorité : **01.07.80 FR 8014640**

(43) Date de publication de la demande :
**27.01.82 Bulletin 82/04**

(45) Mention de la délivrance du brevet :
**26.09.84 Bulletin 84/39**

(84) Etats contractants désignés :
**BE CH DE GB IT LI NL SE**

(56) Documents cités :
**FR-A- 1 460 058**
**FR-A- 2 315 562**
**FR-A- 2 408 676**

(73) Titulaire : **COMMISSARIAT A L'ENERGIE ATOMIQUE**
**Etablissement de Caractère Scientifique Technique**
**et Industriel**
**B.P. 510**
**F-75752 Paris Cedex 15 (FR)**

(72) Inventeur : **Bompard, Bruno**
**Société J. Brochier 23, rue de Montbrillant**
**F-69003 Lyon (FR)**
Inventeur : **Bruyere, Alain**
**Société J. Brochier 258, la Duchere**
**F-69009 Lyon (FR)**

(74) Mandataire : **Mongrédien, André et al**
**c/o BREVATOME 25, rue de Ponthieu**
**F-75008 Paris (FR)**

Jouve, 18, rue St-Denis, 75001 Paris, France

## Description

La présente invention concerne un procédé de fabrication de corps ou pièces de révolution en un matériau tridimensionnel, ainsi qu'une machine permettant de mettre en œuvre industriellement ce procédé.

Plus précisément, l'invention a pour objet un perfectionnement au procédé de fabrication décrit et revendiqué dans la demande de brevet français FR-A-2 408 676 déposé le 23 septembre 1977 au nom du Commissariat à l'Energie Atomique. Le procédé décrit dans cette demande de brevet permet de réaliser des corps ou pièces de forme géométrique quelconque en un matériau tridimensionnel noyé dans une résine, ce matériau pouvant avoir une forte épaisseur. Le matériau constituant la pièce ainsi réalisée comprend trois séries de fils disposées selon trois directions préférentielles, éventuellement perpendiculaires, la densité des fils dans chacune des trois directions pouvant être aussi élevée que désirée.

On notera que le terme « fils » utilisé dans la présente demande désigne aussi bien un fil qu'un filament, une fibre ou encore une mèche, le matériau constituant ce fil pouvant être indifféremment du graphite, du carbone, du verre, de la silice, du polyamide, du polyimide, etc.

Le procédé décrit dans le document FR-A-2 408 676 consiste à réaliser un mandrin support en un matériau apte à recevoir des picots par implantation directe par pression, à implanter sur ce mandrin des rangées de picots réalisés en une matière textile filiforme prérigidifiée par imprégnation d'une résine durcissable, de façon à délimiter entre les picots des couloirs longitudinaux et circonférentiels, à disposer par bobinage et par tramage des nappes de fils superposées dans les couloirs ainsi définis, à densifier l'ensemble ainsi obtenu et enfin, à éliminer le mandrin support.

Plus précisément, le document FR-A-2 408 676 décrit un procédé et une machine permettant d'implanter les picots sur la surface du mandrin. Les opérations de bobinage et de tramage des fils dans les couloirs définis entre les picots s'effectuent ensuite à l'aide d'une machine telle que celle qui est décrite dans le document FR-A-2 315 562 déposé le 26 juin 1975 au nom du Commissariat à l'Energie atomique.

Par rapport aux autres procédés connus de la technique antérieure, le procédé décrit dans le document FR-A-2 408 676 présente l'avantage de permettre l'utilisation de fils préimprégnés de résine, ce qui assure une meilleure répartition de la résine au cœur de la pièce formée. En outre, ce procédé permet d'obtenir facilement et de façon relativement peu coûteuse des pièces en matériau tridimensionnel dont la densité des fils dans chacune des trois directions peut être aussi élevée que désiré.

Pour certaines fabrications particulières, il peut être nécessaire de faire varier le nombre de fils longitudinaux contenus dans les couloirs de tramage ainsi que le nombre de fils circonférentiels contenus dans les couloirs de bobinage d'une extrémité à l'autre de la pièce. Ceci est notamment le cas lorsqu'on désire maintenir une densité de fils sensiblement uniforme dans une pièce dont le diamètre n'est pas constant. Une modulation du nombre de fils est également nécessaire dans l'hypothèse inverse de la fabrication d'un corps de diamètre constant ou non et dont la densité doit varier selon une loi donnée d'une extrémité à l'autre de ce corps.

On a proposé dans le document FR-A-2 315 562 de disposer certains des fils de trame sur une partie seulement de la longueur du mandrin en accrochant ces fils à des picots disposés à cet effet sur le mandrin au cours de la fabrication de celui-ci. Cependant, la solution décrite dans ce document consiste à superposer sur un mandrin lisse des couches de fils longitudinaux et circonférentiels, puis à coudre l'empilement ainsi réalisé selon une troisième direction afin de fabriquer une pièce de révolution tridimensionnelle. Les picots sur lesquels on accroche certains des fils de trame sont donc suffisamment espacés pour permettre à la passette de tramage de passer d'un couloir longitudinal à un autre sans avoir à parvenir au-delà de l'extrémité du mandrin. Au contraire, lorsque la troisième direction des fils est obtenue en formant des picots sur le mandrin avant de réaliser le bobinage et le tramage, comme l'enseigne le document FR-A-2 408 676 et comme le requiert la présente invention, cette solution ne peut plus être envisagée. En effet, la passette de tramage est généralement d'une longueur telle qu'elle ne peut pas se déplacer circonférentiellement entre les picots. De plus, la solution décrite dans la demande de brevet français FR-A-2 315 562 suppose que le chemin parcouru par le chariot de tramage varie selon le couloir de tramage en face duquel se trouve la passette, ce qui est pratiquement impossible à réaliser sur une machine automatique.

Par ailleurs, le document EP-A-0 039 264 publié le 4 novembre 1981 montre qu'il est connu de maintenir des fils dans des couloirs longitudinaux formés entre des rangées de picots sur un mandrin présentant une surface concave en enroulant au moins un fil dans un couloir circonférentiel formé entre les picots dans le creux du mandrin.

Enfin, le document FR-A-1 460 058 décrit une machine servant à bobiner des filaments sur un mandrin, dans laquelle des moyens sont prévus pour réguler le pas d'enroulement des filaments selon la forme du mandrin.

La présente invention a pour objet un procédé de fabrication de pièces de révolution tridimensionnelles constituant un perfectionnement au procédé décrit et revendiqué dans le document FR-A-2 408 676 et permettant notamment de réaliser automatiquement et de façon simple des pièces de révolution dans lesquelles le nombre des fils de trame n'est pas constant d'une extrémité à l'autre de la pièce.

Un tel procédé peut s'appliquer notamment à la fabrication de pièces d'isolateurs électriques en fibres de silice et résine, de pièces de sectionneurs électriques pour courants de très grandes intensités, en fibres de verre. Il peut également être utilisé dans les secteurs automobile et aéronautique, notamment pour la fabrication d'éléments de freins et d'embrayages et pour la réalisation des parois des chambres à combustion et des pistons des véhicules automobiles.

A cet effet, et conformément à l'invention, il est proposé un procédé de fabrication de pièces de révolution en matériau tridimensionnel consistant à réaliser un mandrin support muni de rangées de picots définissant entre elles des couloirs longitudinaux et des couloirs circonférentiels, à disposer par tramage et par bobinage des nappes de fils superposées dans lesdits couloirs, à densifier l'ensemble ainsi obtenu, et enfin à éliminer le mandrin support, dans lequel on dispose certains des fils de trame dans une partie seulement de la longueur des couloirs longitudinaux correspondants, ce procédé étant caractérisé en ce qu'on maintient la ou les extrémités de ces fils qui ne débouchent pas du couloir correspondant en enroulant au fur et à mesure du dépôt de ces fils de trame, immédiatement après ce dépôt et pendant qu'ils sont appliqués contre le mandrin, au moins un fil de maintien dans un ou plusieurs couloirs circonférentiels proches de ladite ou desdites extrémités.

Bien que l'invention soit particulièrement adaptée à la fabrication de pièces tridimensionnelles à partir d'un mandrin sur lequel des picots ont été implantés par pression comme l'enseigne le document FR-A-2 408 676, elle s'applique également au cas où les picots sont réalisés directement sur le mandrin par usinage. Cependant, cette dernière technique présente différents inconvénients tels que le coût et la durée de l'usinage, la limitation qu'elle implique dans la densité des picots et les risques de délaminage qu'elle entraîne. Par conséquent, on choisira de préférence la technique d'implantation des picots par pression dans le cadre de la présente invention.

Selon un mode de réalisation préféré de l'invention, on maintient provisoirement l'extrémité du fil de trame qui ne débouche pas du couloir longitudinal correspondant au moyen d'un premier organe rétractable avant d'enrouler le fil de maintien. Dans ce cas, on peut faire revenir le fil de trame dans ledit couloir longitudinal au-dessus du premier organe rétractable, puis maintenir ladite extrémité du fil de trame en deçà du premier organe rétractable au moyen d'un second organe rétractable, dégager le premier organe rétractable selon une direction sensiblement tangentielle par rapport au mandrin et enfin enrouler le fil de maintien. De préférence, on fait tourner le mandrin d'un angle correspondant à la distance séparant deux couloirs longitudinaux successifs simultanément au dégagement du premier organe rétractable et à un déplacement tangentiel dans le même sens et sur une distance sensiblement égale du second organe rétractable.

Selon une caractéristique secondaire de l'invention, on peut aussi faire varier le nombre de fils de bobinage d'une même couche selon les couloirs dans lesquels ils sont disposés.

Selon encore une autre caractéristique secondaire de l'invention, on dispose les fils de trame et de bobinage directement dans les couloirs correspondants. Ce dépôt est effectué de préférence à la partie supérieure du mandrin et sensiblement dans le plan vertical passant par l'axe de ce dernier. Dans le cas où certaines des rangées longitudinales de picots ne s'étendent pas sur toute la longueur du mandrin et définissent des discontinuités dans la largeur des couloirs longitudinaux, on peut alors déposer les fils de trame en les déplaçant latéralement par rapport au plan vertical à proximité d'au moins certaines des discontinuités, de manière à centrer ces fils par rapport aux couloirs correspondants.

L'invention concerne également une machine pour la fabrication de pièces de révolution en matériau tridimensionnel dont certains des fils de trame ne s'étendent pas sur toute la longueur des couloirs longitudinaux.

Plus précisément, l'invention concerne une machine qui comprend des moyens pour supporter en rotation un mandrin muni de rangées de picots définissant entre elles des couloirs longitudinaux et des couloirs circonférentiels, des moyens de tramage et des moyens de bobinage aptes à déposer dans lesdits couloirs des fils de trame et de bobinage. Conformément à l'invention, cette machine est caractérisée en ce qu'elle comprend de plus au moins un premier organe rétractable assurant le maintien d'une extrémité d'un fil de trame lorsque ce dernier ne débouche pas du couloir correspondant, et un système de bobinage déposant au moins un fil de maintien dans l'un au moins des couloirs circonférentiels proches de ladite extrémité du fil de trame, afin de maintenir l'extrémité correspondante des fils de trame déposés au préalable par les moyens de tramage dans les autres couloirs longitudinaux.

Selon une autre caractéristique de l'invention, la machine comprend de plus un second organe rétractable disposé en retrait par rapport au premier organe rétractable, en considérant ladite extrémité du fil de trame. Les moyens de tramage peuvent alors comprendre au moins une passette guidée de façon à se déplacer selon une génératrice du mandrin à l'intérieur d'un couloir longitudinal, des moyens étant prévus pour faire tourner le mandrin dans un sens déterminé et de façon discontinue selon un pas égal à l'écart entre deux couloirs longitudinaux voisins à chaque fois que la passette parvient à l'une des extrémités du mandrin, chacun des organes rétractables étant mobile radialement par rapport au mandrin afin de permettre le passage de la passette et tangentiellement afin d'accompagner le mandrin dans sa rotation et, pour le premier organe, de permettre son dégagement par rapport au fil de trame. De préférence, le système de bobinage comprend un système d'alimentation en fils et un système de guidage du fil disposé tangentiellement en retrait par rapport au couloir longitudinal dans lequel se déplace la passette et dans un couloir circonférentiel disposé entre ceux dans lesquels sont reçus les organes rétractables. Le système de guidage du fil peut alors être porté par un ensemble de support associé à une partie fixe de la machine, cet ensemble portant également les organes rétractables par l'intermédiaire de moyens pour déplacer ces organes radialement et tangentiellement par rapport au mandrin.

On décrira maintenant, à titre d'exemple non limitatif, un mode de réalisation particulier de l'invention en se référant aux dessins annexés dans lesquels :

la figure 1 est une vue de face d'une machine destinée à réaliser le bobinage et le tramage de couches de fils superposées dans des couloirs définis entre des picots portés par un mandrin, cette machine étant réalisée conformément aux enseignements de la présente invention,

la figure 2 est une vue de face, à plus grande échelle, qui représente le dispositif destiné à maintenir une extrémité des fils de trame au moyen d'un fil de maintien lorsque ces fils de trame ne s'étendent pas sur toute la longueur des couloirs longitudinaux,

la figure 3 est une vue de dessus du dispositif représenté sur la figure 2, et

la figure 4 est une vue qui représente de façon schématique les différentes étapes de fonctionnement du dispositif de maintien représenté sur les figures 2 et 3 au cours du tramage.

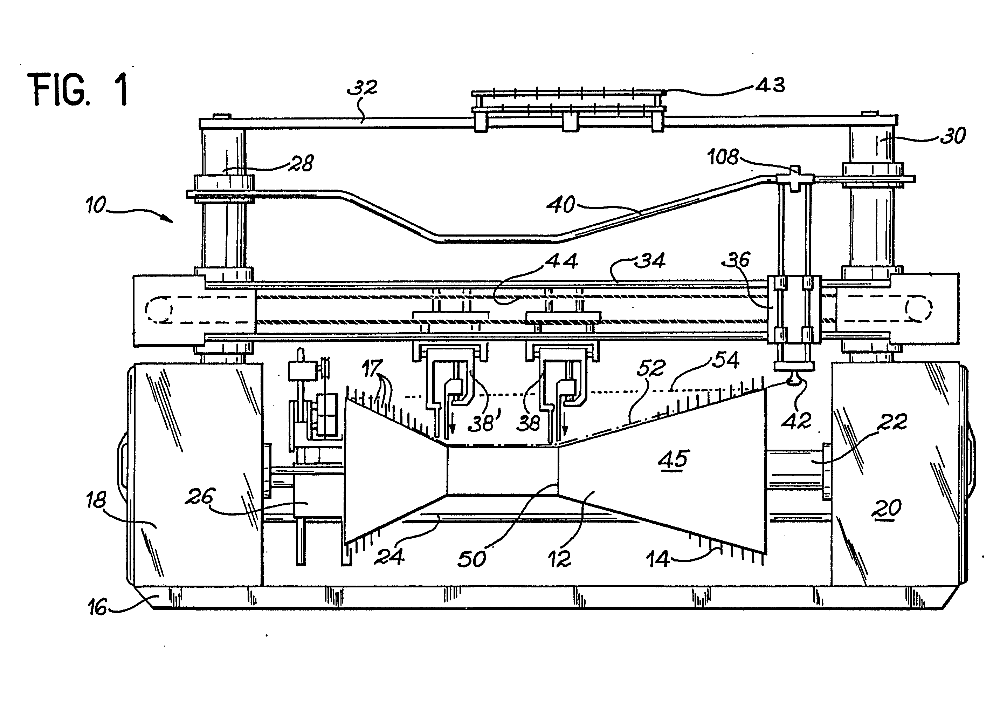

La machine 10 représentée sur la figure 1 est destinée à réaliser par tramage et par bobinage des couches superposées de fils longitudinaux et circonférentiels sur un mandrin 12 portant des rangées de picots 14 définissant des couloirs longitudinaux et circonférentiels.

Avant que le mandrin 12 ne soit monté sur la machine 10, les picots 14 peuvent être réalisés sur le mandrin directement par usinage de celui-ci. Cependant, pour des raisons déjà évoquées, ils sont implantés de préférence par pression.

L'implantation des picots par pression peut se faire, par exemple, à l'aide d'une machine telle que celle qui est décrite dans le document FR-A-2 408 676. Pour les conditions de l'implantation et la structure particulière de la machine, on se reportera utilement au texte de ce brevet. On remarquera simplement ici que les picots sont implantés de préférence selon une direction radiale par rapport à l'axe du mandrin, mais qu'ils peuvent également être inclinés par rapport à cette direction. En outre, les picots sont généralement constitués par des fils de longueur et de diamètre déterminés, rigidifiés par une imprégnation préalable d'une résine thermodurcissable. De plus, le matériau constituant le mandrin est choisi pour permettre à la fois l'implantation directe des picots par simple pression et le maintien de ces picots après implantation. Ce matériau doit également résister aux traitements thermiques ultérieurs, présenter une texture suffisamment rigide et indéformable pour maintenir le corps tridimensionnel qui l'entoure, et pouvoir être facilement détruit après polymérisation de l'ensemble. A cet effet, on utilisera de préférence une mousse rigide telle qu'une mousse à base de polyuréthane ou une mousse phénolique.

Le mandrin 12 garni de picots 14 se caractérise par le fait que les picots sont disposés sous forme de rangées longitudinales et circonférentielles qui définissent entre elles des couloirs longitudinaux (non référencés) et des couloirs circonférentiels 17. Les couloirs circonférentiels peuvent être constitués soit par des couloirs parallèles juxtaposés, soit par un couloir hélicoïdal unique, selon la disposition des picots.

Comme on le voit sur la figure 1, la machine 10 comprend un châssis 16 portant à ses extrémités des consoles gauche 18 et de droite 20 qui font saillie vers le haut à partir du châssis 16. Les consoles 18 et 20 supportent un arbre horizontal 22 sur lequel est monté le mandrin 12. L'arbre 22 est entraîné en rotation par des moyens (non représentés) constitués, par exemple, par un moteur électrique relié à l'arbre 22 par un système de transmission tel qu'un système de poulies et de courroies. La rotation de l'arbre 22 et du mandrin 12 doit intervenir de façon discontinue et selon un pas déterminé correspondant à la distance séparant les couloirs longitudinaux formés entre les picots 14. A cet effet, le moteur électrique d'entraînement de l'arbre 22 est commandé de préférence par un système de commutation électrique classique (non représenté) assurant le fonctionnement de l'ensemble de la machine.

Les consoles 18 et 20 portent également une ou plusieurs traverses 24 horizontales et parallèles à l'axe de l'arbre 22, sur lesquelles se déplace un sous-ensemble de bobinage 26. Le sous-ensemble 26 comprend une ou plusieurs bobines d'alimentation en fils, une passette déposant le ou les fils dans les couloirs de bobinage 17 formés sur le mandrin 12 et des moyens de tension de ces fils (non représentés). Le déplacement du sous-ensemble de bobinage le long de la traverse 24 peut être commandé par tout moyen connu, et notamment par une vis sans fin de pas approprié.

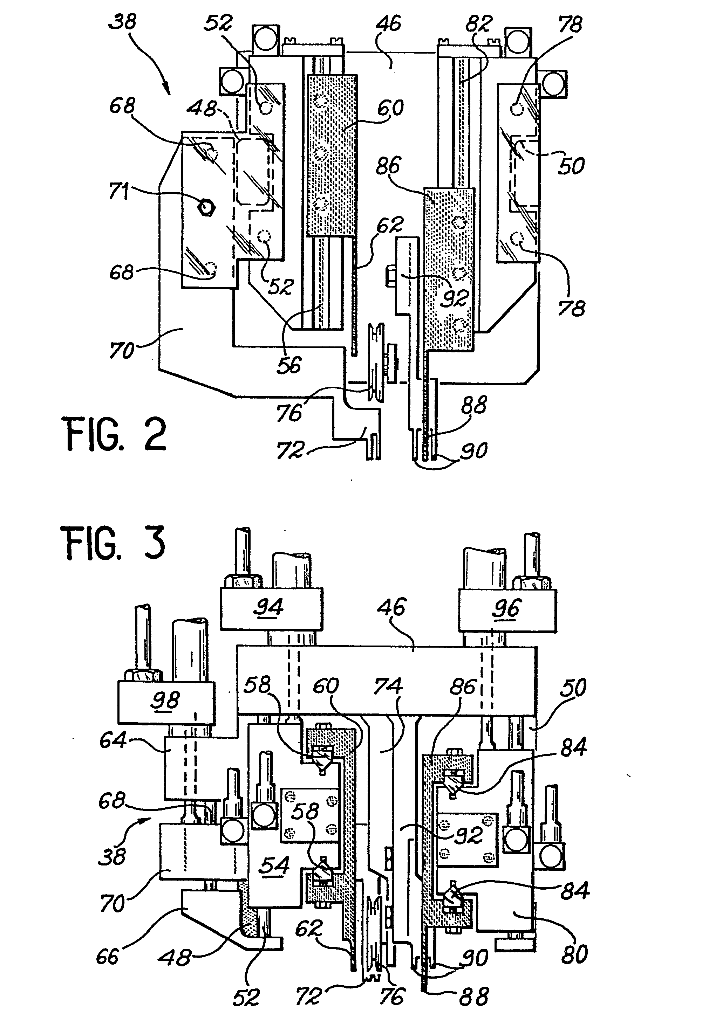

Chacune des consoles 18 et 20 porte à sa partie supérieure une colonne verticale 28, 30 respectivement. Les colonnes 28 et 30 sont reliées à leur partie supérieure par une poutre 32 et elles supportent une traverse 34, horizontale et parallèle à l'axe de l'arbre 22. La traverse 34 supporte un sous-ensemble de tramage 36 ainsi qu'un sous-ensemble ou dispositif de maintien 38 d'une extrémité de certains des fils de trame qui ne s'étendent pas sur toute la longueur du mandrin 12. Ce dispositif est représenté à plus grande échelle sur les figures 2 et 3. Les colonnes 28 et 30 supportent également un rail 40 disposé entre la traverse 34 et la poutre 32 et s'étendant parallèlement à la génératrice supérieure du mandrin 12 située dans le plan vertical passant par son axe.

Le sous-ensemble de tramage 36 comprend un système de guidage 41 qui suit le rail 40. Ce système de guidage 41 est relié de façon rigide à une passette de tramage 42. Le sous-ensemble de tramage 36 est alimenté en fils à partir d'une ou plusieurs bobines (non représentées) au travers d'un système de tension 43 porté par la poutre 32. Il est animé d'un mouvement de va-et-vient le long de la traverse 34 commandé par tout moyen connu tel que, par exemple, un moteur électrique (non représenté) déplaçant alternativement une courroie ou chaîne 44 dans l'une ou l'autre direction autour des deux poulies ou engrenages disposés à chacune des extrémités de la traverse 34. La passette 42 est disposée de telle sorte que le déplacement du sous-ensemble de tramage 36 le long de la traverse 34 commande le déplacement de la passette dans le couloir de tramage supérieur situé dans le plan vertical passant par l'axe du mandrin 12.

Afin de mieux comprendre la structure et le fonctionnement des sous-ensembles de bobinage 26 et de tramage 36 de la machine 10, on se reportera utilement au texte du document FR-A-2 315 562 qui décrit en détail un mode de réalisation particulier d'une machine de bobinage et de tramage comparable à la machine selon la présente invention. Rappelons que le procédé de fabrication d'une pièce tridimensionnelle décrit dans ce brevet français se distingue du procédé selon la présente invention par le fait que le bobinage et le tramage s'effectuent sur un mandrin non muni de picots, les couches de fils ainsi constituées étant ensuite cousues au moyen d'un dispositif approprié. En outre, aucun dispositif comparable aux sous-ensembles de maintien 38 n'est décrit dans ce brevet.

Lors de la fabrication d'une pièce de révolution de diamètre variable telle qu'une pièce comportant des parties tronconiques comme l'illustre la figure 1, il est nécessaire de faire varier d'une extrémité à l'autre de la pièce le nombre de fils de trame contenus dans chacun des couloirs longitudinaux et le nombre de fils de bobinage contenus dans chacun des couloirs circonférentiels si l'on désire maintenir une densité de fils sensiblement uniforme sur toute la longueur de la pièce. Dans certaines applications particulières, et quelle que soit la forme de la pièce réalisée, il peut au contraire être nécessaire de faire varier la densité de fils selon une loi déterminée à l'intérieur de la pièce à réaliser. Dans ce cas, il est également nécessaire de disposer certains des fils de trame dans une partie seulement des couloirs longitudinaux définis sur le mandrin 12 entre les picots 14 et de faire varier le nombre de fils de bobinage contenus dans chacun des couloirs circonférentiels 17 d'une extrémité à l'autre du mandrin.

Conformément à l'invention, des pièces de ce type peuvent être fabriquées automatiquement en série quelle que soit leur forme et quelle que soit la loi de variation de la densité de fils d'une extrémité à l'autre de la pièce en disposant aux emplacements appropriés un ou plusieurs dispositifs de maintien du type du dispositif 38. On décrira maintenant en détail le dispositif 38 en se référant aux figures 2 et 3.

Comme l'illustrent ces figures, le dispositif de maintien 38 comprend un bâti 46 monté fixement à l'emplacement voulu sur la traverse 24, par exemple à l'aide de boulons (non représentés). Plus précisément, le dispositif 38 est monté au niveau de l'extrémité de certains des fils de trame qui ne débouchent pas des couloirs longitudinaux définis entre les picots 14. Le bâti 46 porte quatre bras horizontaux 48, 74, 92 et 50 disposés dans cet ordre en s'éloignant de l'extrémité du fil de trame à maintenir. Ces bras font saillie vers l'avant au-dessus du mandrin 12.

Deux colonnes horizontales 52 sont disposées dans un même plan vertical de part et d'autre du bras 48 pour supporter de façon coulissante un corps de vérin 54. Le déplacement du corps de vérin 54 le long des colonnes 52 est commandé par un vérin 94 porté par le bâti 46. Le corps de vérin 54 est pourvu de deux glissières verticales opposées 56, en forme de V, dans lesquelles sont reçues des coulisses 58 fixées de façon réglable à un sous-ensemble 60 portant un premier organe de maintien escamotable 62. Le déplacement du sous-ensemble 60 le long des glissières 56 est commandé par un vérin disposé dans le corps 54. L'organe 62 est constitué par une plaquette verticale disposée dans un plan radial par rapport au mandrin, et qui s'étend vers le bas au-dessus du mandrin 12 pour pénétrer dans un couloir circonférentiel lorsqu'il est sollicité vers le bas par le vérin 54 et lorsque ce dernier est sollicité vers l'avant par le vérin 94.

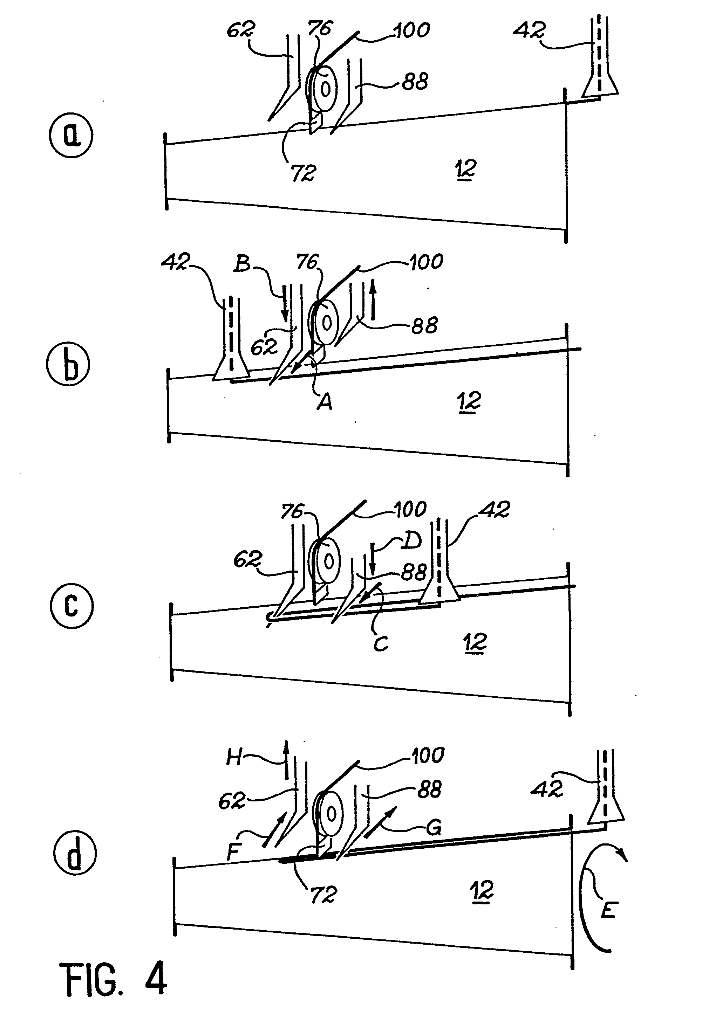

Comme l'illustrent les figures 2 et 3, chaque extrémité du bras 48 se prolonge par une partie en porte-à-faux 64, 66 qui s'étend sensiblement horizontalement en éloignement du bras 50. Les parties en porte-à-faux 64, 66 supportent deux colonnes 68 sur lesquelles est reçu de façon coulissante un support 70. Le support 70 se prolonge verticalement vers le bas, et forme un coude définissant une partie sensiblement horizontale disposée en dessous du bras 48 et dont l'extrémité libre porte un guide-fil 72. Le guide-fil est placé à proximité immédiate de la plaquette 62 et légèrement en retrait par rapport à celle-ci si l'on considère l'extrémité du fil de trame maintenue par le dispositif 38. Le déplacement du support 70 le long des colonnes 68 est commandé par un vérin 98 supporté par la partie en porte-à-faux 64. Le bras 74 porte à son extrémité une roulette guide-fil de bobinage 76 disposée au-dessus du guide-fil 72 et légèrement en retrait par rapport à celui-ci. Comme on le verra par la suite, un fil de maintien 100 (fig. 4) provenant d'une bobine (non représentée) est reçu dans la gorge de la roulette 76 et passe par le guide-fil 72.

Comme pour le bras 48, deux colonnes horizontales 78 sont disposées dans un même plan vertical de part et d'autre du bras 50. Un corps de vérin 80 est monté de façon coulissante sur les colonnes 78 sur lesquelles il peut se déplacer sous l'action d'un vérin 96 porté par le bâti 46. Le corps 80 présente deux glissières verticales opposées 82, en forme de V, dans lesquelles sont reçues des coulisses 84 associées de façon réglable à un sous-ensemble 86 qui porte un second organe de maintien escamotable 88. Le déplacement du sous-ensemble 86 le long des glissières 82 est commandé par un vérin disposé dans le corps 80. L'organe 88 est constitué par une plaquette verticale disposée dans un plan radial par rapport au mandrin 12 et qui s'étend vers le bas au-dessus de ce dernier. Comme dans le cas de la plaquette 62, la largeur de la plaquette 88 est suffisamment faible pour lui permettre de pénétrer dans l'un des couloirs circonférentiels 17 définis entre les picots 14 lorsqu'il est sollicité vers le bas par le vérin 80 et lorsque ce dernier est sollicité vers l'avant par le vérin 96. Comme le montrent les figures 2 et 3, la plaquette 88 est disposée en retrait par rapport au guide-fil 72 si l'on considère l'extrémité du fil de trame maintenu par le dispositif 38. La plaquette 88 est reçue de façon coulissante entre deux fourchettes de retenue fixes 90 montées à l'extrémité du bras 92.

Grâce à la structure qui vient d'être décrite du dispositif de maintien 38, les deux organes de maintien 62 et 88, le guide-fil 72 et les plaquettes fixes 90 sont disposés au-dessus du mandrin 12 à proximité du plan vertical passant par son axe. En outre, les organes de maintien 62 et 88 sont susceptibles de se déplacer à la fois radialement en éloignement du mandrin 12 et tangentiellement en retrait par rapport au plan vertical passant par l'axe du mandrin, alors que le guide-fil 72 peut se déplacer tangentiellement par rapport au mandrin et que la roulette 76 et les plaquettes 90 sont fixes.

Lors de la réalisation d'une couche de fils longitudinaux sur le mandrin 12, le fonctionnement de la machine 10 est le suivant.

Avant le début du tramage, le positionnement du mandrin 12 par rapport aux différents organes de la machine 10 est réalisé avec précision, de telle sorte qu'un couloir longitudinal de tramage se trouve disposé dans le plan vertical passant par l'axe du mandrin. Le guide-fil 72 est alors positionné de telle sorte qu'il se trouve à cheval sur une rangée de picots 14 et les fourchettes de retenues 90 se placent dans des couloirs circonférentiels. Lorsque la passette 42 n'est pas encore engagée dans le couloir de tramage supérieur, comme l'illustrent les figures 1 et 4a, la plaquette 62 se trouve en position levée et en retrait par rapport au plan vertical passant par l'axe du mandrin et la plaquette 88 se trouve en position baissée et en retrait par rapport à ce plan vertical, de manière à maintenir l'extrémité des fils de trame qui viennent d'être déposés dans les couloirs voisins par la passette 42.

Le tramage s'effectue en déplaçant le sous-ensemble 36 le long de la traverse 34 alternativement de gauche à droite et de droite à gauche sous l'action d'un moteur électrique (non représenté) et d'un système d'entraînement tel que la courroie ou chaîne 44. Lorsque le fil de trame ne doit pas s'étendre sur toute la longueur des couloirs longitudinaux ménagés entre les picots 14 sur le mandrin 12, un moyen de limitation de course tel qu'un contact électromagnétique est placé sur le chemin du sous-ensemble 36 afin de stopper son déplacement vers la gauche en considérant la figure 1 lorsque la passette 42 qui se déplace dans le couloir longitudinal supérieur est arrivée légèrement au-delà de l'organe de maintien 62 du dispositif 38.

Dès la venue en contact du sous-ensemble 36 avec le contact de fin de course, l'organe de maintien 62 s'avance tangentiellement au mandrin 12 sous l'action du vérin 94 (flèche A sur la figure 4b) et s'abaisse dans l'un des couloirs circonférentiels 17 sous l'action du vérin 54 (flèche B sur la figure 4b) de façon à maintenir le fil de trame qui vient d'être déposé par la passette 42. Le second organe de maintien 88 remonte alors sous l'action du vérin 80 pour libérer les fils de trame déposés précédemment dans les couloirs voisins et qui se trouvent à ce moment maintenus par les fourchettes de retenue 90, par l'organe 62 et par le fil 100 déposé par le guide-fil 72.

La passette 42 commence alors à revenir vers la droite en considérant les figures 1 et 4 de telle sorte que le fil de trame retour passe sur le pied de l'organe de maintien 62 comme l'illustre schématiquement la figure 4c. De préférence, mais de façon non limitative, la passette 42 s'arrête quelques instants après avoir dépassé le dispositif de maintien 38. Le second organe de maintien 88 se déplace alors vers l'avant, tangentiellement au mandrin 12 sous l'action du vérin 96 (flèche C sur la figure 4c) pour venir se placer au-dessus des fils de trame aller et retour qui viennent d'être déposés par la passette 42 et il descend sous l'action du vérin 80 (flèche D sur la figure 4c) pour maintenir ces fils. Les différents organes du dispositif 38 se trouvent alors dans la position représentée sur la figure 4c.

La passette 42 reprend alors son déplacement vers la droite à l'intérieur du couloir de tramage supérieur jusqu'à ce qu'elle parvienne au-delà de l'extrémité du mandrin 12, dans la position représentée sur la figure 1. A ce moment, sous l'impulsion d'un moteur électrique (non représenté), le mandrin pivote avec l'arbre 22 (flèche E sur la figure 4d) selon un angle tel que la passette 42 se trouve en vis-à-vis du couloir de tramage juxtaposé au couloir dans lequel elle vient de déposer un fil. Simultanément à ce mouvement de rotation du mandrin 12, les organes de maintien 62 et 88 se déplacent tangentiellement au mandrin et vers l'arrière (flèches F et G sur la figure 4d) sous l'action des vérins 94 et 96. Ce mouvement simultané du mandrin 12 et des organes 62 et 88 qui sont en contact avec les fils déposés par la passette a pour effet de réduire les frottements et d'empêcher toute rupture des fils. Le mouvement de rotation du mandrin 12 a également pour conséquence de dérouler le fil de maintien 100, qui passe dans la gorge de la roulette 76 et par le guide-fil 72, sur une longueur correspondant à l'écart entre deux couloirs de tramage juxtaposés. Enfin, le premier organe de maintien 62 remonte sous l'action du vérin 54 (flèche H sur la figure 4d) de façon à dégager complètement l'extrémité du fil de trame qui vient d'être déposé par la passette 42. Ce fil de trame est alors entièrement maintenu par le second organe 88, alors que les fils voisins sont maintenus à la fois par les fourchettes de retenue 90 et par le fil 100 qui passe sur la roulette 76 et sur le guide-fil 72. Un autre cycle de tramage identique à celui qui vient d'être exposé peut alors commencer.

On remarquera que la disposition relative du guide-fil 72 et des organes 62 et 88 est telle que les fils de trame déposés par la passette 42 dans les couloirs longitudinaux commencent à être maintenus par le fil 100 dès que le mandrin E a tourné d'un angle correspondant à la distance séparant deux couloirs longitudinaux consécutifs.

Au début de la réalisation d'une nouvelle couche de fils longitudinaux au moyen du sous-ensemble de tramage 36, l'extrémité libre du fil 100 est fixée au mandrin 12 par tout moyen approprié, par exemple en l'accrochant à l'un des picots 14. Le fonctionnement simultané du sous-ensemble de tramage 36 et du dispositif de maintien 38 s'effectue ainsi en continu jssqu'à ce que la totalité des couloirs de tramage soit garnie d'un ou plusieurs fils au moyen de la passette 42. A ce moment, le fil 100 est coupé et sa seconde extrémité peut également être fixée à l'un des picots 14 de façon à maintenir définitivement la couche de fils de trame ainsi formée. On notera que la commande synchronisée des différentes parties de la machine selon l'invention peut être faite au moyen d'un système électronique commandé par des contacteurs disposés judicieusement. Un tel système ne fait pas partie de l'invention et ne sera pas décrit ici en détail.

Une couche de fils circonférentiels peut ensuite être réalisée au moyen du sous-ensemble de bobinage 26 d'une manière comparable à celle qui est décrite dans le document FR-A-2 315 562. Conformément à une caractéristique secondaire de l'invention, et afin de permettre de faire varier le nombre de fils de bobinage de la même manière que le nombre de fils de trame d'une extrémité à l'autre de la pièce à réaliser, le sous-ensemble de bobinage 26 comprend de préférence plusieurs bobines de fils (non représentées), de telle sorte que le nombre des fils de bobinage déposés par la passette du sous-ensemble 26 dans les couloirs circonférentiels 17 peut être modulé en reliant un nombre plus ou moins grand de ces bobines de fils à la passette de bobinage selon la position du sous-ensemble 26 par rapport au mandrin 12. Le nombre de fils déposés dans chacun des couloirs 17 peut ainsi être modulé à la demande d'une extrémité à l'autre du mandrin 12, ce qui permet de réaliser une pièce de révolution de diamètre non uniforme présentant une densité de fils de bobinage pratiquement constante ou au contraire, une pièce de forme quelconque présentant une densité de fils de bobinage qui varie selon une loi donnée.

Conformément à une autre caractéristique secondaire de l'invention, le nombre des picots 14 implantés sur le mandrin 12 peut également varier d'une extrémité à l'autre du mandrin, soit pour assurer une densité sensiblement constante de fils pour une pièce de diamètre non uniforme, soit au contraire pour faire varier la densité des fils tout au long du mandrin. Dans ce cas, la largeur des couloirs longitudinaux définis entre les picots 14 présente des discontinuités. Afin d'assurer un centrage aussi correct que possible de la passette de tramage 42 par rapport à ces couloirs longitudinaux, il est alors nécessaire de déplacer légèrement la passette 42 dans une direction latérale par rapport au plan vertical passant par l'axe du mandrin au moins au niveau de certaines de ces discontinuités. A cet effet, la passette 42 peut être montée sur des moyens appropriés tels qu'un système du type parallélogramme disposé dans un plan sensiblement horizontal et dont les déformations sont commandées par une came montée sur la traverse 34.

De nombreuses couches superposées de fils longitudinaux et circonférentiels peuvent ainsi être disposées autour du mandrin 12 afin de réaliser une pièce de l'épaisseur souhaitée.

De façon connue, lorsque le nombre de couches désiré a été réalisé sur la machine 10, le mandrin 12 recouvert de ces différentes couches de fils est démonté et l'ensemble subit une ou plusieurs imprégnations par une résine thermodurcissable, telle qu'une résine époxy ou phénolique, puis une polymérisation de cette résine. Le mandrin est ensuite éliminé, généralement par un usinage à la fraise ou à la meule selon l'axe de celui-ci, de manière à ne laisser subsister que le corps creux en matériau tridimensionnel densifié.

De préférence, le ou les fils circonférentiels et longitudinaux disposés sur le mandrin 12 par la passette de bobinage (non représentée) et par la passette de tramage 42 sont constitués par des fils, des filaments, des fibres ou des mèches réalisés en graphite, en carbone, en silice ou en verre. Les fils selon les trois directions peuvent être de même nature ou de nature différente selon les caractéristiques de la pièce fabriquée. Dans le procédé selon l'invention, ces fils peuvent avantageusement être imprégnés de résine thermodurcissable, ce qui permet d'améliorer sensiblement la répartition de la résine au cœur de la pièce formée.

Il apparaît clairement à la lumière de la description qui précède que l'invention s'applique plus particulièrement à la réalisation de pièces creuses de révolution en tissu tridimensionnel dont la densité des fils d'une extrémité à l'autre de la pièce peut être parfaitement contrôlée quelle que soit la forme de la génératrice de la pièce. Comme on l'a vu, l'invention s'applique à tout corps fabriqué par bobinage et par tramage sur un mandrin muni de picots, et cela quel que soit le procédé utilisé pour réaliser les picots.

**Revendications**

1. Procédé de fabrication de pièces de révolution en matériau tridimensionnel consistant à réaliser un mandrin support (12) muni de rangées de picots (14) définissant entre elles des couloirs longitudinaux et des couloirs circonférentiels (17), à disposer par tramage et par bobinage des nappes de fils superposées dans lesdits couloirs, à densifier l'ensemble ainsi obtenu, et enfin à éliminer le mandrin support, dans lequel on dispose certains des fils de trame dans une partie seulement de la longueur des couloirs longitudinaux correspondants, caractérisé en ce qu'on maintient la ou les extrémités de ces fils qui ne débouchent pas du couloir correspondant en enroulant, au fur et à mesure du dépôt de ces fils de trame, immédiatement après ce dépôt et pendant qu'ils sont appliqués contre le mandrin au moins un fil de maintien (100) dans un ou plusieurs couloirs circonférentiels (17) proches de ladite ou lesdites extrémités.

2. Procédé selon la revendication 1, caractérisé en ce qu'on maintient provisoirement l'extrémité du fil de trame qui ne débouche pas du couloir longitudinal correspondant au moyen d'un premier organe rétractable (62) avant d'enrouler le fil de maintien (100).

3. Procédé selon la revendication 2, caractérisé en ce qu'on fait revenir le fil de trame dans ledit couloir longitudinal au-dessus du premier organe rétractable (62), en ce qu'on maintient ensuite ladite extrémité du fil de trame en deçà du premier organe rétractable (62) au moyen d'un second organe rétractable (88) selon une direction sensiblement tangentielle par rapport au mandrin (12) et enfin en ce qu'on enroule le fil de maintien (100).

4. Procédé selon la revendication 3, caractérisé en ce qu'on fait tourner le mandrin (12) d'un angle correspondant à la distance séparant deux couloirs longitudinaux successifs simultanément au dégagement du premier organe rétractable (62) et à un déplacement tangentiel dans le même sens et sur une distance sensiblement égale du second organe rétractable (88).

5. Procédé selon l'une quelconque des revendications précédentes, caractérisé en ce qu'on fait varier le nombre de fils de bobinage d'une même couche selon les couloirs (17) dans lesquels ils sont disposés.

6. Procédé selon l'une quelconque des revendications précédentes, caractérisé en ce qu'on dépose les fils de trame et de bobinage directement dans les couloirs correspondants.

7. Procédé selon la revendication 6, caractérisé en ce qu'on dépose les fils de trame et de bobinage dans les couloirs correspondants à la partie supérieure du mandrin (12) et sensiblement dans le plan vertical passant par l'axe de ce dernier.

8. Procédé selon la revendication 7, caractérisé en ce que certaines des rangées longitudinales de picots ne s'étendant pas sur toute la longueur du mandrin et définissant des discontinuités dans la largeur des couloirs longitudinaux, on dépose les fils de trame en les déplaçant latéralement par rapport audit plan vertical à proximité d'au moins certaines des discontinuités, de manière à centrer ces fils par rapport aux couloirs correspondants.

9. Machine pour la fabrication de pièces de révolution en matériau tridimensionnel comprenant des moyens (22) pour supporter en rotation un mandrin (12) muni de rangées de picots (14) définissant entre elles des couloirs longitudinaux et des couloirs circonférentiels (17), des moyens de tramage (36) et des moyens de bobinage (26) aptes à déposer dans lesdits couloirs des fils de trame et de bobinage, cette machine étant caractérisée en ce qu'elle comprend de plus au moins un premier organe rétractable (62) assurant le maintien d'une extrémité d'un fil de trame lorsque ce dernier ne débouche pas du couloir correspondant, et un système de bobinage (72, 76) déposant au moins un fil de maintien (100) dans l'un au moins des couloirs circonférentiels (17) proches de ladite extrémité du fil de trame, afin de maintenir l'extrémité correspondante des fils de trame déposés au préalable par les moyens de tramage (36) dans les autres couloirs longitudinaux.

10. Machine selon la revendication 9, caractérisée en ce qu'elle comprend de plus un second organe rétractable (88) disposé en retrait par rapport au premier organe rétractable (62) en considérant ladite extrémité du fil de trame.

11. Machine selon la revendication 10, caractérisée en ce que les moyens de tramage (36) comprennent au moins une passette (42) guidée de façon à se déplacer selon une génératrice du mandrin (12) à l'intérieur d'un couloir longitudinal, des moyens étant prévus pour faire tourner le mandrin (12) dans un sens déterminé et de façon discontinue selon un pas égal à l'écart entre deux couloirs longitudinaux voisins à chaque fois que la passette (42) parvient à l'une des extrémités du mandrin (12), chacun des organes rétractables (62, 88) étant mobile radialement par rapport au mandrin afin de permettre le passage de la passette (42) et tangentiellement afin d'accompagner le mandrin (12) dans sa rotation et, pour le premier organe (62), de permettre son dégagement par rapport au fil de trame.

12. Machine selon la revendication 11, caractérisée en ce que le système de bobinage (72, 76) comprend un système d'alimentation en fil et un système de guidage du fil (72) disposé tangentiellement en retrait par rapport au couloir longitudinal dans lequel se déplace la passette (42) et dans un couloir circonférentiel (17) disposé entre ceux dans lesquels sont reçus les organes rétractables (62, 88).

13. Machine selon la revendication 12, caractérisée en ce que le système de guidage du fil (72) est porté par un ensemble de support (46) associé à une partie fixe de la machine, ledit ensemble de support (46) portant également les organes rétractables (62, 88) par l'intermédiaire de moyens (94, 54, 96, 80) pour déplacer ces organes radialement et tangentiellement par rapport au mandrin (12).

## Claims

1. Process for the production of bodies of revolution in three-dimensional material comprising providing a support mandrel (12) having rows of pins (14) between which are defined longitudinal and circumferential corridors (17), forming a fabric by weaving and winding superimposed layers of filaments in said corridors, densifying the assembly thereby obtained, and finally removing the support mandrel, in which certain of the woven filaments are positioned in only a portion of the length of corresponding longitudinal corridors, characterized in that the end or ends of those filaments which do not extend to the ends of the corresponding longitudinal corridors are held in place, as weaving proceeds and immediately after they are laid down and held against the mandrel, by winding at least one retaining filament (100) in one or more circumferential corridors (17) near the said end or ends.

2. Process according to Claim 1, characterized in that the end of the woven filament which does not extend to the end of the corresponding longitudinal corridor is temporarily held in place by a first retractable means (62) before winding the retaining filament (100).

3. Process according to Claim 2, characterized in that the woven filament is run back along said longitudinal corridor above the first retractable means (62), that the said end of the woven filament is held beside the first retractable means (62) by a second retractable means (88) operating in a substantially tangential direction with respect to the mandrel (12), and that the retaining filament (100) is then wound on.

4. Process according to Claim 3, characterized in that the mandrel (12) is rotated through an angle corresponding to the distance between two successive longitudinal corridors simultaneously with disengagement of the first retractable means (62) and with a tangential displacement of the second retractable means (88) in the same sense and over a substantially equal distance.

5. Process according to any one of the preceding Claims, characterized in that the number of wound filaments in one layer is varied in accordance with the corridors (17) in which they are wound.

6. Process according to any one of the preceding Claims, characterized in that the woven filaments and wound filaments are laid directly in the corresponding corridors.

7. Process according to Claim 6, characterized in that the woven filaments and wound filaments are laid in their corresponding corridors in the upper part of the mandrel (12) and substantially in the vertical plane passing through the axis of the latter.

8. Process according to Claim 7, characterized in that certain of the longitudinal rows of pins do not extend over the entire length of the mandrel and define discontinuities in the length of the longitudinal corridors, and in that woven filaments are laid down while displacing them laterally with respect to the said vertical plane near at least some of the discontinuities, so as to centre said filaments with respect to corresponding corridors.

9. Apparatus for the production of bodies of revolution in three-dimensional material comprising means (22) for rotatably supporting a mandrel (12) having rows of pins (14) between which are defined longitudinal and circumferential corridors (17), weaving means (36) and winding means (26) adaptad to lay down woven filaments and wound filaments within said corridors, said apparatus being characterized in that it additionally comprises at least one first retractable means (62) enabling the holding in place of one end of a woven filament while the latter does not come out of a corresponding corridor, and a winding system (72, 76) laying at least one retaining filament (100) in at least one of the circumferential corridors (17) near said end of said woven filament, whereby to hold in place the corresponding end of woven filaments previously laid down by the weaving means (36) in the other longitudinal corridors.

10. Apparatus according to Claim 9, characterized in that it additionally comprises a second retractable means (88) located to the rear of the first retractable means (62) with respect to the said end of the woven filament.

11. Apparatus according to Claim 10, characterized in that the weaving means (36) comprise at least one shuttle (42) movably guidable along a generatrix of the mandrel (12) within a longitudinal corridor, means being provided to rotate the mandrel (12) in a predetermined sense and discontinuously through an angle equivalent to the distance between two adjacent longitudinal corridors each time the shuttle (42) passes beyond one of the ends of the mandrel (12), each of the retractable means (62, 88) being movable radially with respect to the mandrel to permit passage of the shuttle (42), and tangentially whereby to accompany the mandrel (12) in its rotation, and, with regard to the first means (62), to permit its disengagement in respect of the woven filament.

12. Apparatus according to Claim 11, characterized in that the winding system (72, 76) comprises a filament-feed system and a filament-guiding system (72) set back tangentially with respect to the longitudinal corridor along which the shuttle (42) is moved, and in a circumferential corridor (17) located between those receiving the retractable means (62, 88).

13. Apparatus according to Claim 12, characterized in that the filament-guiding system (72) is carried by a support assembly (46) associated with a fixed part of the apparatus, said support assembly (46) also carrying the retractable means (62, 88) by way of means (94, 54, 96, 80) for displacing said means radially and tangentially with respect to the mandrel (12).

## Ansprüche

1. Verfahren für die Herstellung von Rotationskörpern aus dreidimensional angeordnetem Material, bei welchem eine Stützform (12) derart mit Stacheln (14) besetzt wird, daß diese Längskanäle und Umfangskanäle (17) zwischen sich begrenzen, bei welchem ferner Lagen von in Längsrichtung und Umfangsrichtung verlaufenden Fäden übereinander in die Kanäle eingelegt werden, die auf diese Weise erhaltene Anordnung verdichtet und schließlich die Stützform entfernt wird, und bei welchem bestimmte Längsfäden nur über einen Teil der Länge der jeweiligen Längskanäle in diese eingelegt werden, dadurch gekennzeichnet, daß man die Enden derjenigen fäden, welche nicht aus dem jeweiligen Kanal ausmünden, festlegt, indem man fortschreitend mit dem Einlegen der Längsfäden, unmittelbar nach dem Einlegen und solange die Fäden in Anlage an der Stützform gehalten sind, wenigstens einen Haltefaden (100) in einen oder mehrere nahe dem genannten Ende bzw. den genannten Enden verlaufende(n) Umfangskanal bzw. -kanäle (17) einlegt.

2. Verfahren nach Anspruch 1, dadurch gekennzeichnet, daß man das Ende des nicht aus dem jeweiligen Längskanal austretenden Längsfadens mittels eines ersten einziehbaren Organs (62) vorläufig festhält, bevor man den Haltefaden (100) aufwickelt.

3. Verfahren nach Anspruch 2, dadurch gekennzeichnet, daß man den Längsfaden in dem Längskanal über das erste einziehbare Organ (62) hinweg zurückführt, daß man das Ende des Längsfadens dann mittels eines zweiten, in einer in bezug auf die Stützform im wesentlichen tangentialen Richtung einziehbaren Organs (88) diesseits des ersten einziehbaren Organs festhält, und daß man schließlich den Haltefaden (100) aufwickelt.

4. Verfahren nach Anspruch 3, dadurch gekennzeichnet, daß man die Stützform (12) gleichzeitig mit der Loslösung des ersten einziehbaren Organs (62) und einer in der gleichen Richtung und im wesentlichen über die gleiche Distanz verlaufenden Tangentialbewegung des zweiten einziehbaren Organs (88) um einen dem Abstand zwischen zwei aufeinander folgenden Längskanälen entsprechenden Winkel fortdreht.

5. Verfahren nach einem der vorstehenden Ansprüche, dadurch gekennzeichnet, daß man die Anzahl der Umfangsfäden jeweils einer Lage je nach den Kanälen (17), in denen sie niedergelegt sind, variiert.

6. Verfahren nach einem der vorstehenden Ansprüche, dadurch gekennzeichnet, daß man die Längs- und Umfangsfäden direkt in die jeweiligen Kanäle einlegt.

7. Verfahren nach Anspruch 6, dadurch gekennzeichnet, daß man die Längs- und Umfangsfäden am oberen Teil der Stützform (12) und im wesentlichen in der durch die Achse der Letzteren verlaufenden senkrechten Ebene in die jeweiligen Kanäle einlegt.

8. Verfahren nach Anspruch 7, dadurch gekennzeichnet, daß sich einige der Längsreihen der Stacheln nicht über die gesamte Länge der Stützform erstrecken und dadurch Absätze in der Breite·der Längskanäle bilden, und daß man die Längsfäden einlegt, indem man sie nahe wenigstens einigen dieser Absätze in bezug auf die genannte senkrechte Ebene seitlich versetzt, um diese Fäden in bezug auf die jeweiligen Kanäle zu zentrieren.

9. Maschine für die Herstellung von Rotationskörpern aus dreidimensional angeordnetem Material, mit Einrichtungen (22) für die drehbare Lagerung einer mit Längskanäle umd Umfangskanäle (17) zwischen sich begrenzenden Stacheln (14) besetzten Stützform (12), Einlegeeinrichtungen (36) und Aufwickeleinrichtungen (26) zum Einlegen bzw. Einwickeln von Längsfäden bzw. Umfangsfäden in die genannten Kanäle, dadurch gekennzeichnet, daß die Maschine außerdem wenigstens ein erstes einziehbares Organ (62) zum Festhalten eines Endes eines nicht aus dem jeweiligen Kanal austretenden Längsfadens sowie ein Aufwickelsystem (72, 76) aufweist, mittels dessen wenigstens ein Haltefaden (100) in wenigstens einen nahe dem genannten Ende des Längsfadens verlaufenden Umfangskanal (17) einlegbar ist, um das entsprechende Ende von zuvor mittels der Einlegeeinrichtung (36) in die anderen Längskanäle eingelegten Längsfäden festzulegen.

10. Maschine nach Anspruch 9, dadurch gekennzeichnet, daß sie außerdem ein zweites einziehbares Organ (88) aufweist, welches in bezug auf das genannte Ende des Längsfadens rückwärts des ersten einziehbaren Organs (62) angeordnet ist.

11. Maschine nach Anspruch 10, dadurch gekennzeichnet, daß die Einlegeeinrichtung (36) wenigstens eine Einziehnadel (42) aufweist, welche so geführt ist, daß sie sich innerhalb eines Längskanals entlang einer Erzeugenden der Stützform (12) bewegt, daß die Stützform (12) mittels dafür vorgesehener Einrichtungen bei jedem Eintreffen der Einziehnadel (42) an einem Ende der Stützform (12) diskontinuierlich in einer bestimmten Richtung um einen dem Abstand zwischen zwei benachbarten Längskanälen entsprechenden Schritt fortdrehbar ist, und daß jedes der einziehbaren Organe (62, 88) für die Freigabe des Durchgangs der Einziehnadel (42) in bezug auf die Stützform radial und zur Begleitung der Stützform (12) bei ihrer Drehung sowie, was das erste Organ (62) betrifft, zur Loslösung desselben von dem Längsfaden, tangential bewegbar ist.

12. Maschine nach Anspruch 11, dadurch gekennzeichnet, daß das Aufwickelsystem (72, 76) ein Fadenliefersystem und ein Fadenführungssystem (72) aufweist, welches in bezug auf den Längskanal, in welchem sich die Einziehnadel (42) bewegt, in Tangentialrichtung rückwärts in einem Umfangskanal (17) angeordnet ist, welcher zwischen denen verläuft, in denen die einziehbaren Organe (62, 88) Aufnahme finden.

13. Maschine nach Anspruch 12, dadurch gekennzeichnet, daß das Fadenführungssystem (72) von einer einem feststehenden Teil der Maschine zugeordneten Trageinrichtung (46) getragen ist, welche unter Zwischenschaltung von Einrichtungen (94, 54, 96, 80) zum radialen und tangentialen Bewegen der einziehbaren Organe (62, 88) in bezug auf die Stützform (12) außerdem die einziehbaren Organe (62, 88) trägt.

FIG. 1

32   43   30   28   108   10   40   44   34   36   17   52   54   38'   38   42   45   22   18   26   24   50   12   14   16   20

0 044 760

FIG. 2

FIG. 3

**FIG. 4**